# EUROPÄISCHE PATENTSCHRIFT

(11) **EP 2 896 214 B1**
(45) Veröffentlichungstag und Bekanntmachung des Hinweises auf die Patenterteilung: **09.11.2022**
(21) Anmeldenummer: 13759495.8
(22) Anmeldetag: 05.09.2013
(51) Int. Cl.: H04Q 9/00, H04L 7/04, H04L 12/40, B60R 21/01, H04L 25/02

(54) **EMPFÄNGERSCHALTUNG UND VERFAHREN ZU IHREM BETRIEB**
RECEIVER CIRCUIT AND METHOD FOR THE OPERATION THEREOF
CIRCUIT DE RECEPTION ET PROCÉDÉ DE SON OPÉRATION

(30) Priorität: 12.09.2012 DE 102012216142
(43) Veröffentlichungstag der Anmeldung: 22.07.2015
(73) Patentinhaber: Robert Bosch GmbH, 70442 Stuttgart (DE)
(72) Erfinder: SIEMSS, Matthias, 72810 Gomaringen (DE); MOMENI, Massoud, 72762 Reutlingen (DE)
(86) Internationale Anmeldenummer: PCT/EP2013/068333
(87) Internationale Veröffentlichungsnummer: WO 2014/040897

(56) Entgegenhaltungen:
- DE-A1-102008 044 147
- GB-A- 2 287 622
- US-A- 5 701 410
- "Freescale Semiconductor Data Sheet: Technical Data PSI5 Inertial Sensor MMA52xxKW Rev 8", , 30. September 2011 (2011-09-30), Seiten 1-55, XP055091200, Gefunden im Internet: URL:http://pdf.datasheetarchive.com> [gefunden am 2013-12-02]
- "PSI5 Peripheral Sensor Interface Specification V1.3", , 29. Juli 2008 (2008-07-29), Seiten 1-46, XP055028023, Gefunden im Internet: URL:http://www.psi5.org/en/pool/pdf/psi5_s pecification_v13_080729.pdf [gefunden am 2012-05-23]

## Beschreibung

Die Erfindung betrifft ein Insassenschutzsystem für ein Kraftfahrzeug gemäß Patentanspruch 1 und ein zugehöriges Verfahren gemäß Patentanspruch 6.

### Stand der Technik

Es ist bekannt, zur Informationsübertragung in rauer Umgebung, beispielsweise zur Übertragung von Sensordaten in einem Kraftfahrzeug, Stromschnittstellen zu verwenden. Stromschnittstellen werden beispielsweise in Insassenschutzsystemen von Kraftfahrzeugen zur Übertragung von mit peripheren Sensoren aufgezeichneten Messdaten an ein zentrales Steuergerät genutzt. Es ist ferner bekannt, solche Stromschnittstellen als Bus auszubilden, über den mehrere Sensoren mit einem zentralen Empfänger verbunden sind. Zur Synchronisierung der sendenden Sensoren ist es bekannt, durch das empfangende Steuergerät einen Arbeitstakt in Form eines Spannungspulses vorzugeben. Jeder solcher Spannungspuls markiert den Beginn eines neuen Zeitschlitzes, der für eine Datenübertragung durch einen Sensor genutzt werden kann.

Die GB 2 287 622 A beschreibt ein serielles Datenkommunikationsnetzwerk für ein Motorsteuergerät, bei dem ein einzelnes Steuergerät Taktsignale ausgibt, die von allen weiteren mit dem Datenkommunikationsnetzwerk verbundenen Geräten empfangen und genutzt werden.

Das Datenblatt "Freescale Semiconductor Data Sheet: Technical Data PSI5 Inertial Sensor MMA52xxKW Rev 8" beschreibt einen Beschleunigungssensor, der Spannungspulse ausgeben und detektieren kann.

### Offenbarung der Erfindung

Eine Aufgabe der vorliegenden Erfindung besteht darin, ein verbessertes Insassenschutzsystem für ein Kraftfahrzeug bereitzustellen. Diese Aufgabe wird durch ein Insassenschutzsystem für ein Kraftfahrzeug mit den Merkmalen des Anspruchs 1 gelöst. Eine weitere Aufgabe der vorliegenden Erfindung besteht darin, ein verbessertes Verfahren zum Betreiben einer Empfängerschaltung anzugeben. Diese Aufgabe wird durch ein Verfahren mit den Merkmalen des Anspruchs 6 gelöst. Bevorzugte Weiterbildungen sind in den abhängigen Ansprüchen angegeben.

Eine erfindungsgemäße Schaltungsanordnung ist dazu ausgebildet, einen Spannungspuls auf einer Busleitung auszugeben. Dabei weist die Schaltungsanordnung eine Einrichtung auf, die dazu ausgebildet ist, festzustellen, ob eine Spannung an der Busleitung einen festgelegten Schwellenwert erreicht hat. Die Schaltungsanordnung ermittelt dann einen Zeitpunkt zu dem der von ihr ausgegebene Spannungspuls den festgelegten Schwellenwert erreicht, der eine Triggerschwelle darstellt. Hierdurch kann die Schaltungsanordnung vorteilhafterweise den Zeitpunkt ermitteln, zu dem auch andere an der Busleitung angeschlossene Teilnehmer den von der Schaltungsanordnung ausgegebenen Spannungspuls detektieren. Dadurch kann die Schaltungsanordnung ihr eigenes Verhalten vorteilhafterweise besser mit dem Verhalten der anderen an der Busleitung angeschlossenen Teilnehmer synchronisieren. Hierbei können herstellungs- und betriebsbedingte zeitliche Variationen, beispielsweise Variationen aufgrund von Temperatur-, Alterungs- und Konfigurationseinflüssen, ausgeglichen werden. Dies erlaubt es vorteilhafterweise, notwendige zeitliche Reservepuffer zu verkürzen, was einen Betrieb der Busleitung mit höherem Datendurchsatz ermöglicht.

In einer Ausführungsform der Schaltungsanordnung umfasst die Einrichtung einen Komparator. Dabei ist ein erster Eingang des Komparators mit der Busleitung verbunden. Vorteilhafterweise kann die Schaltungsanordnung dann mittels des Komparators die an der Busleitung anliegende elektrische Spannung überwachen.

In einer Ausführungsform der Schaltungsanordnung ist der erste Eingang des Komparators über einen Spannungsteiler mit der Busleitung verbunden.

Vorteilhafterweise reduziert sich dadurch die Größe des durch den Komparator zu überwachenden Spannungsbereichs, wodurch es ermöglicht wird, den Komparator mit einer niedrigeren Versorgungsspannung zu betreiben. Hierdurch sinken vorteilhafterweise die Leistungsaufnahme und die erzeugte Abwärme des Komparators. Außerdem kann die Schaltungsanordnung dann mit geringerer Komplexität und geringerem Flächenbedarf ausgebildet werden.

In einer Ausführungsform der Schaltungsanordnung ist ein zweiter Eingang des Komparators mit einer Spannungsquelle verbunden. Vorteilhafterweise kann die zweite Spannungsquelle dann eine Vergleichsspannung bereitstellen, die es dem Komparator ermöglicht, festzustellen, ob die an der Busleitung anliegende Spannung den festgelegten Schwellenwert erreicht hat.

In einer Ausführungsform der Schaltungsanordnung ist diese zum Empfangen von Datensignalen über die Busleitung ausgebildet. Vorteilhafterweise kann die Schaltungsanordnung dann als Empfängerschaltung zum Empfangen von über die Busleitung gesendeten Datensignalen dienen.

Die Schaltungsanordnung ist ausgebildet, eine festgelegte Zeitdauer nach einem Zeitpunkt, zu dem die Spannung an der Busleitung den festgelegten Schwellenwert erreicht hat, mit einem Empfangen von Datensignalen zu beginnen. Vorteilhafterweise ist der von der Schaltungsanordnung ermittelte Zeitpunkt, zu dem die Spannung an der Busleitung den festgelegten Schwellenwert erreicht hat, dann gleich dem Zeitpunkt, zu dem andere an der Busleitung angeschlossene Teilnehmer den von der Schaltungsanordnung ausgegebenen Spannungspuls detektieren. Dies vermittelt der Schaltungsanordnung eine sehr genaue Kenntnis eines weiteren Zeitpunkts, zu dem einer der an der Busleitung angeordneten Teilnehmer mit einem Senden von Daten beginnt.

Ein erfindungsgemäßes Insassenschutzsystem für ein Kraftfahrzeug umfasst einen Sensor, eine Busleitung und eine Schaltungsanordnung der oben beschriebenen Art. Vorteilhafterweise kann die Busleitung bei diesem Insassenschutzsystem mit vergleichsweise hohem Datendurchsatz betrieben werden, was eine Übertragung einer großen Zahl von Sensordaten ermöglicht. Dadurch stehen dem Insassenschutzsystem mehr Informationen zur Erkennung potenziell gefährlicher Situationen zur Verfügung.

In einer bevorzugten Ausführungsform des Insassenschutzsystems ist die Busleitung als Stromschnittstelle ausgebildet. Vorteilhafterweise erlaubt die Busleitung dann eine robuste und gegen Störeinflüsse unempfindliche Datenübertragung.

Ein erfindungsgemäßes Verfahren zum Betreiben einer Empfängerschaltung umfasst Schritte zum Ausgeben eines Spannungspulses über eine Busleitung und zum Ermitteln eines Zeitpunkts, zu dem eine Spannung an der Busleitung einen festgelegten Schwellenwert erreicht. Vorteilhafterweise kann die Empfängerschaltung dadurch auch den Zeitpunkt feststellen, zu dem ein oder mehrere andere an der Busleitung angeschlossene Teilnehmer den von der Empfängerschaltung ausgegebenen Spannungspuls detektieren. Dies vermittelt der Empfängerschaltung eine sehr genaue Kenntnis eines Zeitpunkts, zu dem ein anderer an der Busleitung angeschlossener Teilnehmer mit einem Senden von Daten beginnt.

In einer Weiterbildung des Verfahrens wird ein weiterer Schritt ausgeführt zum Beginnen eines Datenempfangs eine festgelegte Zeitdauer nach dem ermittelten Zeitpunkt. Vorteilhafterweise wird der Beginn des Datenempfangs dann sehr genau mit einem Beginn eines Aussendens von Daten synchronisiert.

Die Erfindung wird nun anhand der beigefügten Figuren näher erläutert. Dabei zeigen in schematischer Darstellung:
- Fig. 1: ein Signaldiagramm von an einer Busleitung anliegenden Signalen;
- Fig. 2: ein Insassenschutzsystem gemäß einer ersten Ausführungsform;
- Fig. 3: ein Insassenschutzsystem gemäß einer zweiten Ausführungsform; und
- Fig. 4: ein Insassenschutzsystem gemäß einer dritten Ausführungsform.

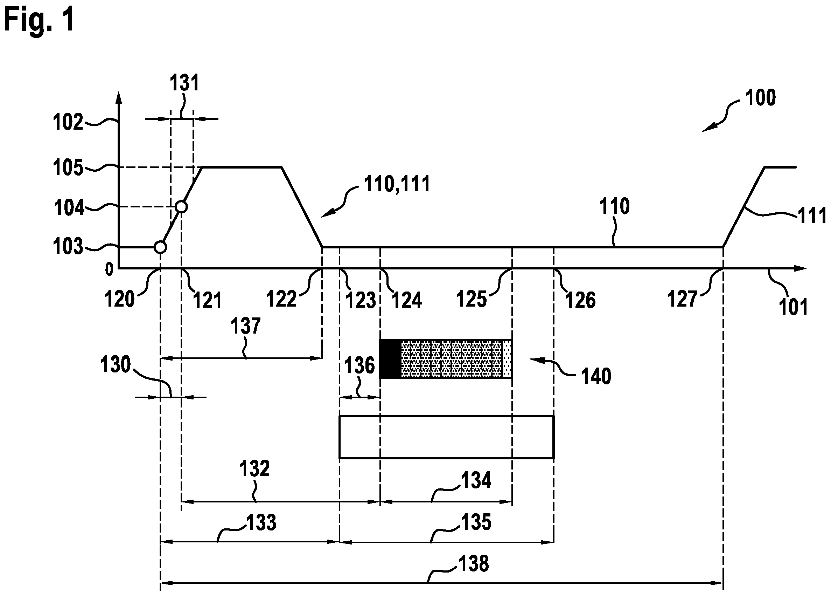

Figur 1 zeigt ein Signaldiagramm 100 zur Erläuterung eines zeitlichen Verhaltens bei einer Datenkommunikation in einem synchronen Betrieb über einen Bus. Die Datenkommunikation kann beispielsweise in einem Insassenschutzsystem eines Kraftfahrzeugs stattfinden und zur Übertragung von Sensordaten von einem peripheren Sensor an ein zentrales Steuergerät dienen. In diesem Fall sind an den Bus neben dem Steuergerät ein oder mehrere Sensoren angeschlossen. Bei dem Bus kann es sich beispielsweise um eine Stromschnittstelle handeln. In diesem Fall weist der Bus eine Datenleitung und eine Masseleitung auf. Im Folgenden wird lediglich die Datenleitung betrachtet und als Busleitung bezeichnet.

Falls mehrere Sensoren gemeinsam an die Busleitung angeschlossen sind, so muss deren Betrieb synchronisiert werden. Zu diesem Zweck gibt das als Empfänger dienende zentrale Steuergerät einen Arbeitstakt in Form periodischer Spannungspulse vor. Jeder solcher Spannungspuls wird durch die an der Busleitung angeschlossenen Sensoren detektiert und markiert den Beginn eines neuen Zeitschlitzes für eine Datenübertragung.

Auf einer horizontalen Achse des in Fig. 1 dargestellten Signaldiagramms 100 ist eine Zeit 101 aufgetragen. Eine vertikale Achse zeigt eine Spannung 102. Dargestellt ist ein zeitlicher Verlauf der an der Busleitung anliegenden Spannung 110. Anfangs liegt an der Busleitung eine Versorgungsspannung 103 an.

Zu einem Startzeitpunkt 120 gibt eine mit der Busleitung verbundene Empfängerschaltung (beispielsweise ein zentrales Steuergerät eines Insassenschutzsystems) einen Spannungspuls 111 über die Busleitung aus. Der Spannungspuls 111 markiert den Beginn eines neuen Zeitschlitzes. Der Spannungspuls 111 weist eine Pulsdauer 137 auf und dauert bis zu einem Endzeitpunkt 122. Nach einer Periodenlänge 138 folgt zu einem weiteren Startzeitpunkt 127 ein weiterer Spannungspuls 111. Die Spannungspulse 111 können auch als Synchronisationspulse bezeichnet werden.

Der durch die Empfängerschaltung ausgegebene Spannungspuls 111 lässt die an der Busleitung anliegende Spannung 110 bis auf eine Pulsamplitudenspannung 105 ansteigen. Bereits zu einem Triggerzeitpunkt 121, der eine Anstiegszeit 130 nach dem Startzeitpunkt 120 legt, hat die an der Busleitung anliegende Spannung 110 einen Schwellenwert 104 erreicht, der zwischen der Versorgungsspannung 103 und der Pulsamplitudenspannung 105 liegt. Sobald die an der Busleitung anliegende Spannung 110 den Schwellenwert 104 erreicht, kann ein an der Busleitung angeschlossener Sender (beispielsweise ein Sensor des Insassenschutzsystems) den Spannungspuls 111 detektieren. Der Triggerzeitpunkt 121, zu dem die an der Busleitung anliegende Spannung 110 den Schwellenwert 104 erreicht, kann durch unterschiedliche Einflüsse um eine Zeitvariation 131 variieren. Beispielsweise können fertigungsbedingte Chargenunterschiede und unterschiedliche Betriebsbedingungen, beispielsweise Temperaturunterschiede, Alterungseffekte und unterschiedliche Buskonfigurationen, die Geschwindigkeit des Anstiegs der an der Busleitung anliegenden Spannung 110 beeinflussen.

Der an der Busleitung angeschlossene Sender detektiert den Spannungspuls 111 zu dem um die Zeitvariation 131 variablen Triggerzeitpunkt 121. Nach einer im Sender festgelegten Senderverzögerungszeit 132 beginnt der Sender mit dem Aussenden eines Datenworts 140 über die Busleitung. Das Aussenden des Datenworts 140 beginnt zu einem Sendestartzeitpunkt 124 und erstreckt sich über ein Sendezeitfenster 134 bis zu einem Sendeendzeitpunkt 125.

Der Empfänger muss in der Lage sein, das vom Sender gesendete Datenwort 140 vollständig zu empfangen. Hierzu beginnt der Empfänger zu einem Empfangsstartzeitpunkt 123 mit einem Datenempfang und setzt diesen während eines Empfangszeitfensters 135 bis zu einem Empfangsendezeitpunkt 126 fort. Der Empfangsstartzeitpunkt 123 muss vor dem Sendestartzeitpunkt 124 liegen. Der Empfangsendezeitpunkt 126 muss nach dem Sendeendzeitpunkt 125 liegen. Der Sendestartzeitpunkt 124 und entsprechend auch der Sendeendzeitpunkt 125 können sich wegen der Variabilität des Triggerzeitpunktes 121 jedoch verschieben.

Eine Möglichkeit, sicherzustellen, dass der Empfangsstartzeitpunkt 123 zeitlich vor dem Sendestartzeitpunkt 124 liegt, besteht darin, den Empfangsstartzeitpunkt 123 um eine vom Startzeitpunkt 120 aus bemessene Empfängerverzögerungszeit 133 hinter den Startzeitpunkt 120 zu legen und die Empfängerverzögerungszeit 133 dabei so zu bemessen, dass sich zwischen dem Empfangsstartzeitpunkt 123 und dem Sendestartzeitpunkt 124 ein zeitlicher Sicherheitsabstand 136 ergibt, der in jedem Fall größer als die Zeitvariation 131 des Triggerzeitpunkts 121 ist. Der hierzu erforderliche große zeitliche Sicherheitsabstand 136 reduziert allerdings die nutzbare Länge des Empfangszeitfensters 135 und setzt damit der pro Zeiteinheit übertragbaren Datenmenge eine obere Grenze. Ein Verkürzen des zeitlichen Sicherheitsabstands 136 würde dagegen die Robustheit der Datenübertragung über die Busleitung reduzieren.

Günstiger ist daher, wenn der Empfänger den Triggerzeitpunkt 121, zu dem der Sender den Spannungspuls 111 an der Busleitung detektiert, ebenfalls kennt. In diesem Fall kann der Empfänger den Zeitpunkt, zu dem der Sender mit dem Aussenden des Datenworts 140 beginnt, sehr genau bestimmen. Der Empfänger kann dann zu eben diesem Zeitpunkt, oder sehr kurz vor diesem Zeitpunkt, mit dem Empfangen von Daten beginnen. Da der Sender nach dem Ablauf der Senderverzögerungszeit 132 nach dem Triggerzeitpunkt 121 mit dem Aussenden von Daten beginnt, kann der Empfänger nach dem Ablauf einer etwas kürzeren Zeit als der Senderverzögerungszeit 132 nach dem Triggerzeitpunkt 121 mit dem Empfangen von Daten beginnen.

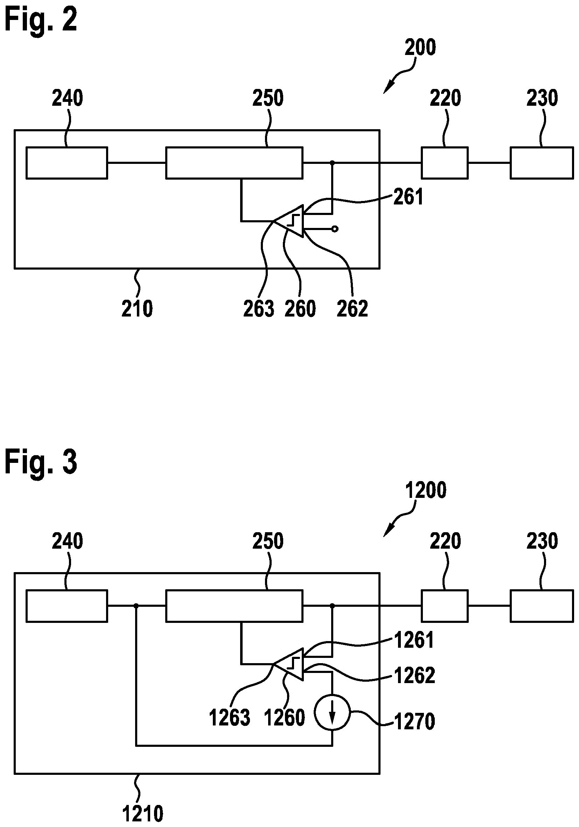

Figuren 2, 3 und 4 zeigen Ausführungsformen von Insassenschutzsystemen, bei denen eine Empfängerschaltung ausgebildet ist, den Triggerzeitpunkt 121, zu dem der von der Empfängerschaltung ausgegebene Spannungspuls 111 zu einem Anstieg der an der Busleitung anliegenden Spannung 110 bis über den Schwellenwert 104 geführt hat, zu bestimmen. Die Bestimmung dieses Zeitpunkts erfolgt jeweils durch Überwachung der an der Busleitung anliegenden Spannung 110. In Figuren 2, 3 und 4 sind gleiche und gleich wirkende Komponenten mit denselben Bezugszeichen versehen und werden lediglich einmal bei ihrer ersten Erwähnung beschrieben.

Fig. 2 zeigt eine schematische Darstellung eines Insassenschutzsystems 200 gemäß einer ersten Ausführungsform. Das Insassenschutzsystem 200 kann beispielsweise in einem Kraftfahrzeug eingebaut sein. Das Insassenschutzsystem 200 umfasst eine Empfängerschaltung 210, eine Busleitung 220 und einen Sensor 230. Die Empfängerschaltung 210 dient zum Empfangen von durch den Sensor 230 über die Busleitung 220 gesendete Messdaten. Die Empfängerschaltung 210 kann beispielsweise als Steuergerät ausgebildet sein. Die Busleitung 220 dient zur synchronen Datenübertragung zwischen dem Sensor 230 und der Empfängerschaltung 210. Die Busleitung 220 kann beispielsweise Teil einer Stromschnittstelle sein. In diesem Falle wäre neben der Busleitung 220 noch eine Massenleitung vorhanden, die in Fig. 2 nicht dargestellt ist. Neben dem Sensor 230 kann das Insassenschutzsystem 200 weitere Sensoren aufweisen, die ebenfalls mit der Busleitung 220 verbunden sind, um Daten an die Empfängerschaltung 210 zu übermitteln.

Die Empfängerschaltung 210 umfasst eine Spannungsversorgung 240, die dazu dient, die Versorgungsspannung 103 an die Busleitung 220 anzulegen. Außerdem umfasst die Empfängerschaltung 210 weitere Schaltungsteile 250, die zum Empfangen und Auswerten von durch den Sensor 230 über die Busleitung 220 übertragenen Daten dienen.

Zum Bestimmen des Triggerzeitpunkts 121 weist die Empfängerschaltung 210 einen Komparator 260 auf. Der Komparator 260 weist einen ersten Eingang 261, einen zweiten Eingang 262 und einen Ausgang 263 auf. Der erste Eingang 261 des Komparators 260 ist mit der Busleitung 220 verbunden. Über den zweiten Eingang 262 wird dem Komparator 260 eine Vergleichsspannung in Höhe des Schwellenwerts 104 zugeführt. Der zweite Eingang 262 kann zu diesem Zweck mit einer eigenen Spannungsquelle verbunden sein.

Der Ausgang 263 des Komparators 260 ist mit den weiteren Schaltungsteilen 250 verbunden. Sobald die an der Busleitung 220 anliegende Spannung 110 den Schwellenwert 104 erreicht, also zum Triggerzeitpunkt 121, gibt der Komparator 260 über seinen Ausgang 263 ein entsprechendes Signal an die weiteren Schaltungsteile 250 aus. Hierdurch erfahren die weiteren Schaltungsteile 250 den Triggerzeitpunkt 121 und können ausgehend vom Triggerzeitpunkt 121 einen Startzeitpunkt für den Empfang von Daten durch die Empfängerschaltung 210 berechnen.

Fig. 3 zeigt ein Insassenschutzsystem 1200 gemäß einer zweiten Ausführungsform. Das Insassenschutzsystem 1200 weist eine Empfängerschaltung 1210 auf. Im Unterschied zur Empfängerschaltung 210 des Insassenschutzsystems 200 weist die Empfängerschaltung 1210 des Insassenschutzsystem 1200 einen Komparator 1260 mit einem ersten Eingang 1261, einem zweiten Eingang 1262 und einem Ausgang 1263 auf. Der erste Eingang 1261 des Komparators 1260 ist wiederum mit der Busleitung 220 verbunden. Der zweiten Eingang 1262 des Komparators 1260 ist mit einer Spannungsquelle 1270 verbunden, die zwischen dem zweiten Eingang 1262 und der Spannungsversorgung 240 angeordnet ist. Die Spannungsquelle 1270 ist dazu ausgebildet, eine Spannung zu generieren, deren Höhe der Differenz zwischen dem Schwellenwert 104 und der Versorgungsspannung 103 entspricht. Da die Spannungsquelle 1270 gegen die Spannungsversorgung 240 geschaltet ist, entspricht die sich am zweiten Eingang 1262 des Komparators 1260 einstellende effektive Spannung wiederum dem Schwellenwert 104. Auf diese Weise kann auch der Komparator 1260 feststellen, wenn die an der Busleitung 220 anliegende Spannung 110 den Schwellenwert 104 erreicht. In diesem Fall gibt der Komparator 1260 wiederum ein entsprechendes Signal über seinen Ausgang 1263 an die weiteren Schaltungsteile 250 aus.

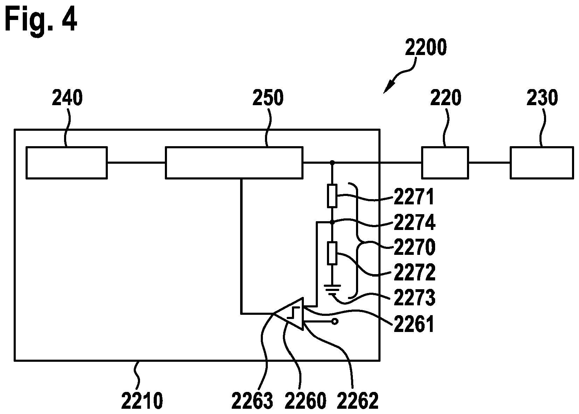

Fig. 4 zeigt ein Insassenschutzsystem 2200 gemäß einer dritten Ausführungsform. Das Insassenschutzsystem 2200 weist eine Empfängerschaltung 2210 auf. Anstelle des Komparators 260 weist die Empfängerschaltung 2210 einen Komparator 2260 mit einem ersten Eingang 2261, einem zweiten Eingang 2262 und einem Ausgang 2263 auf. Der erste Eingang 2261 des Komparators 2260 ist über einen Spannungsteiler 2270 mit der Busleitung 220 verbunden. Der Spannungsteiler 2270 umfasst einen ersten Widerstand 2271 und einen zweiten Widerstand 2272. Der erste Widerstand 2271 ist zwischen der Busleitung 220 und einem Zwischenknoten 2274 angeordnet. Der zweite Widerstand 2272 ist zwischen dem Zwischenknoten 2274 und einem Massekontakt 2273 angeordnet. Der erste Eingang 2261 des Komparators 2260 ist mit dem Zwischenknoten 2274 verbunden. Der Ausgang 2263 des Komparators 2260 ist wiederum mit den weiteren Schaltungsteilen 250 verbunden.

Die am ersten Eingang 2261 anliegende geteilte Spannung entspricht der an der Busleitung 220 anliegenden Spannung 110 multipliziert mit dem Quotienten aus dem Widerstand des zweiten Widerstands 2270 und der Summe der Widerstände des ersten Widerstands 2271 und des zweiten Widerstands 2272. Über den zweiten Eingang 2262 wird dem Komparator 2260 eine Referenzspannung zugeführt, deren Höhe dem Schwellenwert 104 multipliziert mit dem Quotienten aus der Größe des zweiten Widerstands 2272 und der Summe der Widerstände des ersten Widerstands 2271 und des zweiten Widerstands 2272 entspricht. Hierdurch kann auch der Komparator 2260 feststellen, wenn die an der Busleitung 220 anliegende Spannung 110 den Schwellenwert 104 erreicht. Allerdings weisen die an den Eingängen 2261, 2262 anliegenden Spannungen kleinere Werte auf, wodurch der Komparator 2260 im Vergleich zu den Komparatoren 260, 1260 mit einer geringeren Versorgungsspannung betrieben werden kann. Hierdurch reduzieren sich die Leistungsaufnahme des Komparators 2260 und die durch den Komparator 2260 generierte Abwärme. Auch die zur Realisierung der Empfängerschaltung 2210 benötigte Siliziumfläche und die Komplexität der Empfängerschaltung 2210 reduzieren sich hierdurch vorteilhafterweise.

Die Versorgungsspannung 103 kann einige Volt betragen. Beispielsweise kann die Versorgungsspannung 103 einen Wert von 6,7 V aufweisen. Die Pulsamplitudenspannung 105 kann beispielsweise einen Wert von etwa 9 V betragen. Die Periodenlänge 138 kann beispielsweise 500 µs betragen. Die Pulsdauer 137 kann beispielsweise 40 µs betragen.

## Patentansprüche

1. Insassenschutzsystem (200, 1200, 2200) für ein Kraftfahrzeug mit einem Sensor (230), einer Busleitung (220) und einer Schaltungsanordnung (210, 1210, 2210),
wobei die Schaltungsanordnung (210, 1210, 2210) zum Empfangen von durch den Sensor (230) über die Busleitung (220) ausgesendeten Datensignalen (140) ausgebildet ist,
wobei die Schaltungsanordnung (210, 1210, 2210) dazu ausgebildet ist, einen Spannungspuls (111) auf einer Busleitung (220) auszugeben,
wobei die Schaltungsanordnung (210, 1210, 2210) eine Einrichtung (260, 1260, 2260) aufweist, die dazu ausgebildet ist, festzustellen, ob eine Spannung (110) an der Busleitung (220) einen festgelegten Schwellenwert (104) erreicht hat,
wobei die Schaltungsanordnung (210, 1210, 2210) ausgebildet ist, eine festgelegte Zeitdauer (132) nach einem Zeitpunkt (121), zu dem die Spannung (110) an der Busleitung (220) den festgelegten Schwellenwert (104) erreicht hat, mit einem Empfangen von Datensignalen zu beginnen.

2. Insassenschutzsystem (200, 1200, 2200) gemäß Anspruch 1,
wobei die Einrichtung einen Komparator (260, 1260, 2260) umfasst,
wobei ein erster Eingang (261, 1261, 2261) des Komparators (260, 1260, 2260) mit der Busleitung (220) verbunden ist.

3. Insassenschutzsystem (200, 1200, 2200) gemäß Anspruch 2,
wobei der erste Eingang (2261) des Komparators (2260) über einen Spannungsteiler (2270) mit der Busleitung (220) verbunden ist.

4. Insassenschutzsystem (200, 1200, 2200) gemäß einem der Ansprüche 2 oder 3,
wobei ein zweiter Eingang (262, 1262, 2262) des Komparators (260, 1260, 2260) mit einer Spannungsquelle verbunden ist.

5. Insassenschutzsystem (200, 1200, 2200) gemäß einem der vorhergehenden Ansprüche,
wobei die Busleitung (220) als Stromschnittstelle ausgebildet ist.

6. Verfahren zum Betreiben eines Insassenschutzsystems (200, 1200, 2200) gemäß einem der vorhergehenden Ansprüche,
wobei die Schaltungsanordnung (210, 1210, 2210) die folgenden Schritte ausführt:
- Ausgeben eines Spannungspulses (111) über die Busleitung (220);
- Ermitteln eines Zeitpunkts (121), zu dem eine Spannung (110) an der Busleitung (220) einen festgelegten Schwellenwert (104) erreicht;
- Beginnen eines Datenempfangs eine festgelegte Zeitdauer (132) nach dem ermittelten Zeitpunkt (121).

## Claims

1. Occupant protection system (200, 1200, 2200) for a motor vehicle,
comprising a sensor (230), a bus line (220) and a circuit arrangement (210, 1210, 2210),
wherein the circuit arrangement (210, 1210, 2210) is configured for receiving data signals (140) emitted by the sensor (230) via the bus line (220),
wherein the circuit arrangement (210, 1210, 2210) is configured to output a voltage pulse (111) on a bus line (220),
wherein the circuit arrangement (210, 1210, 2210) has a device (260, 1260, 2260) configured to ascertain whether a voltage (110) on the bus line (220) has reached a defined threshold value (104),
wherein the circuit arrangement (210, 1210, 2210) is configured to begin receiving data signals after a defined time duration (132) after a point in time (121) at which the voltage (110) on the bus line (220) reached the defined threshold value (104).

2. Occupant protection system (200, 1200, 2200) according to Claim 1,
wherein the device comprises a comparator (260, 1260, 2260),
wherein a first input (261, 1261, 2261) of the comparator (260, 1260, 2260) is connected to the bus line (220) .

3. Occupant protection system (200, 1200, 2200) according to Claim 2,
wherein the first input (2261) of the comparator (2260) is connected to the bus line (220) via a voltage divider (2270).

4. Occupant protection system (200, 1200, 2200) according to either of Claims 2 and 3,
wherein a second input (262, 1262, 2262) of the comparator (260, 1260, 2260) is connected to a voltage source.

5. Occupant protection system (200, 1200, 2200) according to any of the preceding claims,
wherein the bus line (220) is configured as a current interface.

6. Method for operating an occupant protection system (200, 1200, 2200) according to any of the preceding claims,
wherein the circuit arrangement (210, 1210, 2210) carries out the following steps:
- outputting a voltage pulse (111) via the bus line (220) ;
- determining a point in time (121) at which a voltage (110) on the bus line (220) reaches a defined threshold value (104);
- beginning data reception after a defined time duration (132) after the determined point in time (121).

## Revendications

1. Système de protection d'occupants (200, 1200, 2200) destiné à un véhicule automobile, ledit système comprenant un capteur (230), une ligne de bus (220) et un ensemble de circuit (210, 1210, 2210),
l'ensemble de circuit (210, 1210, 2210) étant conçu pour recevoir des signaux de données (140) envoyés par le capteur (230) sur la ligne de bus (220),
l'ensemble de circuit (210, 1210, 2210) étant conçu pour délivrer une impulsion de tension (111) sur une ligne de bus (220),
l'ensemble de circuit (210, 1210, 2210) comprenant un dispositif (260, 1260, 2260) qui est conçu pour déterminer si une tension (110) sur la ligne de bus (220) a atteint une valeur seuil spécifiée (104), l'ensemble de circuit (210, 1210, 2210) étant conçu pour commencer à recevoir des signaux de données au bout d'une durée spécifiée (132) après un instant (121) auquel la tension (110) sur la ligne de bus (220) a atteint la valeur seuil spécifiée (104).

2. Système de protection d'occupants (200, 1200, 2200) selon la revendication 1,
le dispositif comprenant un comparateur (260, 1260, 2260),
une première entrée (261, 1261, 2261) du comparateur (260, 1260, 2260) étant reliée à la ligne de bus (220).

3. Système de protection d'occupants (200, 1200, 2200) selon la revendication 2, la première entrée (2261) du comparateur (2260) étant reliée à la ligne de bus (220) par le biais d'un diviseur de tension (2270).

4. Système de protection d'occupants (200, 1200, 2200) selon l'une des revendications 2 ou 3,
une deuxième entrée (262, 1262, 2262) du comparateur (260, 1260, 2260) étant reliée à une source de tension.

5. Système de protection d'occupants (200, 1200, 2200) selon l'une des revendications précédentes,
la ligne de bus (220) étant conçue comme une interface de courant.

6. Procédé de fonctionnement d'un système de protection d'occupants (200, 1200, 2200) selon l'une des revendications précédentes,
l'ensemble de circuit (210, 1210, 2210) exécutant les étapes suivantes :
- délivrer une impulsion de tension (111) sur la ligne de bus (220) ;
- déterminer un instant (121) auquel une tension (110) sur la ligne de bus (220) atteint une valeur seuil spécifiée (104) ;
- commencer la réception de données au bout d'une durée spécifiée (132) après l'instant déterminé (121).
